# EUROPÄISCHE PATENTANMELDUNG

(11) **EP 1 769 671 A1**
(43) Veröffentlichungstag der Anmeldung: **04.04.2007**
(21) Anmeldenummer: 06019994.0
(22) Anmeldetag: 25.09.2006
(51) Int. Cl.: A01D 75/18

(54) **Landwirtschaftliche Arbeitseinheit mit einer Arbeitsmaschine und einer Positionsbestimmungseinheit**

(30) Priorität: 28.09.2005 DE 102005046544
(71) Anmelder: CLAAS Saulgau GmbH, 88348 Bad Saulgau (DE)
(72) Erfinder: Geng, Manfred, 88348 Bad Saulgau (DE)
(74) Vertreter: Roth, Klaus

(57) **Zusammenfassung**

Es wird eine landwirtschaftliche Arbeitseinheit mit einer wenigstens ein Arbeitsaggregat (2, 14) umfassenden landwirtschaftlichen Arbeitsmaschine (1, 2, 14) zum Bearbeiten eines landwirtschaftlichen Feldes und/oder von auf dem Feld angeordneten Pflanzen, wobei die Arbeitsmaschine (1, 2, 14) wenigstens eine Erfassuhgseinheit (3, 4) zum Erfassen keines auf dem Feld angeordneten Objektes (5), insbesondere eines Metallgegenstands, sowie wenigstens eine Positionsbestimmungseinheit (8, 9) zum Bestimmen der Position, insbesondere der Positionskoordinaten, der Arbeitsmaschine (1, 2, 14) und/oder des Objektes (5) umfasst, vorgeschlagen, womit das Entfernen des Objekts (5) verbessert wird. Dies wird erfindungsgemäß dadurch erreicht, dass wenigstens eine Speichereinheit. (12) zum Speichern der Position vorgesehen und dass wenigstens eine Positionsanzeigevorrichtung (17, 23, 28, 29, 30, 31) zum Anzeigen der gespeicherten Position vorgesehen und dass die Positionsanzeigevorrichtung (17, 23, 28, 29, 30, 31) in einer von der landwirtschaftlichen Arbeitsmaschine separaten Baueinheit (18) integriert ist.

## Beschreibung

Die Erfindung betrifft eine landwirtschaftliche Arbeitseinheit mit einer wenigstens ein Arbeitsaggregat umfassenden landwirtschaftlichen Arbeitsmaschine zum Bearbeiten eines landwirtschaftlichen Feldes und/oder von auf dem Feld angeordneten Pflanzen nach dem Oberbegriff des Anspruchs 1.

### Stand der Technik

Bei landwirtschaftlichen Arbeitsmaschinen kommt es in der-Praxis immer wieder vor, dass außergewöhnlich belastete Komponenten durch Materialermüdungen oder durch Kollision mit Hindernissen brechen und gegebenenfalls weggeschleudert werden. Diese Komponenten bzw. ihre Bruchteile sowie andere Fremdkörper können dann bei den nachfolgenden Maschinen schwerwiegende kostspielige Schäden und Betriebsstörungen verursachen. Als Beispiel sollen hier die Kreisel von Heumaschinen dienen, bei denen es immer wieder vorkommt, dass Zinken brechen oder sogar aus ihrer Verankerung an den Zinkentragerrahmen gerissen und weggeschleudert werden.

Spätestens beim Zusammenschwaden des stängeligen Ernteguts werden diese vorwiegend aus metallischen Werkstoffen bestehende Komponenten direkt in den Arbeitsbereich des Feldhäckslers gebracht. Nach dem Durchlaufen der Querförderschnecke und dem Weitertransport durch die Einzugstrommeln, erreichen die Fremdkörper die Häckseltrommel. Hierbei verursachen sie sowohl an den Einzugstrommeln als auch an der Häckseltrommel bedeutende kostspielige Schäden, häufig sogar Totalschäden.

Aus dem gattungsbildenden Stand der Technik ist beispielsweise eine Vorrichtung bekannt, bei der in den Einzugswalzen des Feldhäckslers ein Metalldetektor integriert ist. Die Integration dieses Metalldetektors hat zur Folge, dass die Einzugswalzen aus einem speziellen, teuren, nicht magnetischen Werkstoff bestehen müssen, was zu erheblichen Herstellungskosten des Feldhäckslers führt.

In den letzten Jahren sind die Arbeitsgeschwindigkeiten der landwirtschaftlichen Arbeitsmaschinen jedoch stark gestiegen. Daher müssen beispielsweise die Einzugswalzen nach dem Detektieren eines Fremdkörpers schneller gebremst werden, um eine Beschädigung der Häckseltrommel zu vermeiden.

Um die Reaktionszeit beispielsweise von Feldhäckslern auf entsprechend detektierte Fremdkörper zu erhöhen, wurde beispielsweise gemäß der gattungsbildenden EP 1 266 560 A1 vorgeschlagen, die Detektion des Fremdkörpers nicht vom Feldhäcksler, sondern von einer zuvor das Feld bearbeitenden Maschine detektieren zu lassen und den entsprechenden Ort des Fremdkörpers bzw. dessen Ortskoordinaten dem Häcksler zu übermitteln. Dies kann mittels dem GPS-System erfolgen. Hierdurch wird es möglich, dass der Feldhäcksler entsprechende Vorbereitungsmaßnahmen treffen kann, um rechtzeitig den Fremdkörper zu eliminieren und/oder im Bereich des georteten Fremdkörpers das Einziehen von entsprechendem Erntegut mit dem Fremdkörper kurzzeitig abzuschalten.

Der Einsatz von GPS-Systemen in der Landwirtschaft ist auch aus der DE 196 29 618 A1 bekannt. Hierin wird jedoch ein Routenplanungssystem beschrieben, wobei die Route mittels z.T. sehr lange, z.B. mehrere Wochen, Monate oder gar Jahre, vor der Bearbeitung des Feldes ermittelter Felddaten von einem Computersystem generiert wird. Die für die Planung der Route relevanten Felddaten sind hierbei dauerhaft vorhandene Rahmenbedingungen, wie vor allem die Umrandung des Feldes, die Position von Bäumen, Strommasten, Teichen etc., und beruhen auf allgemeinen GPS-Daten, die unabhängig von der eigentlichen Bearbeitung mit der Arbeitsmaschine bzw. unabhängig von dieser ermittelt wurden. Dementsprechend aufwendig sowie geräte- und planungsintensiv sind derartige Routenplanungssysteme.

Weiterhin wird hierdurch der Bearbeitungsweg bzw. -fahrstrecke lange vor der Bearbeitung festgelegt, so dass derartige Routenplanungssysteme sehr unflexibel auf gegebenenfalls auftretende Vorkommnisse bzw. Änderungen der Rahmenbedingungen reagieren können. Zum Beispiel können noch nicht erfasste Hindernisse, wie ein abgebrochener Zinken einer vorhergehenden Bearbeitung etc., auch nicht in das Routenplanungssystem bzw. für die geplante Bearbeitung einbezogen werden. Somit können die oben genannten kostspieligen Schäden bzw. Totalschäden bei Feldhäckslern auch mit derartigen Routenplanungssystemen nicht verhindert werden. Entsprechend haben sich derartig komplexe und unflexible Routenplanungssysteme in der Landwirtschaft bislang nicht durchgesetzt.

Darüber hinaus ist aus der DE 33 32 578 A1 ein Gerät für Metalle in Futterschwaden offenbart, das vor dem Traktor mit nachfolgender Ladeeinheit angeordnet ist, wobei eine Meldung bezüglich dem Vorhandensein eines metallischen Fremdkörpers an den Landwirt generiert wird. Beim Erfassen eines entsprechenden Fremdkörpers wird ein optisches oder akustisches Signal generiert. Die Bedienperson nimmt dieses Signal wahr und kann sodann die Arbeit abbrechen und nach dem Fremdkörper suchen und dieses entfernen. Hierbei ist auch ein automatisches Abschalten der landwirtschaftlichen Maschine möglich. Der Fahrer hat hier aufgrund der Beabstandung von frontseitiger Detektion und heckseitiger Aufnahme des Futtergutes genügend Zeit zur Reaktion bzw. zum Bremsen und somit zum verhindern eines Schadens der Aufnahmevorrichtüng. Allerdings wird durch das Ab- und Aufsteigen vom Traktor und dem zum Teil zeitaufwendigen Suchen des detektierten Gegenstandes im unter dem Traktor liegenden Schwad die Searbeitungsdauer enorm verzögert. Dies ist gerade bei den hohen wirtschaftlichen Anforderungen moderner Landwirtschaft von großem Nachteil.

### Aufgabe und Vorteile der Erfindung

Aufgabe der Erfindung ist es demgegenüber, eine landwirtschaftliche Arbeitseinheit mit einer eine Erfassungseinheit zum Erfassen eines auf dem Feld angeordneten Objekts umfassenden Arbeitsmaschine sowie mit wenigstens einer Positionsbestimmungseinheit zum Bestimmen der Position, insbesondere der Positionskoordinaten, der Arbeitsmaschine und/oder des Objektes, vorzuschlagen, womit das Entfernen des Objekts verbessert wird.

Diese Aufgabe wird, ausgehend von einer landwirtschaftlichen Arbeitseinheit der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine landwirtschaftliche Arbeitseinheit dadurch aus, dass wenigstens eine Speichereinheit zum Speichern der Position vorgesehen und dass wenigstens eine Positionsanzeigevorrichtung zum Anzeigen der gespeicherten Position vorgesehen ist und dass die Positionsanzeigevorrichtung in einer von der landwirtschaftlichen Arbeitsmaschine separaten Baueinheit integriert ist.

Vor allem mit Hilfe der vorteilhaften Speichereinheit kann eine zeitliche Entkopplung von der Erfassung und der Beseitigung verwirklicht werden. Dies ermöglicht beispielsweise, dass eine spezielle Person bzw. eine von der Arbeitsmaschine unabhängige Person, wie z.B. eine weniger qualifizierte Hilfskraft bzw. ein Kind, nach der Erfassung des Objektes bzw. dessen Position, das Objekt vor der eigentlichen Bearbeitung des Feldes bzw. der Pflanzen/des Erntegutes auf dem Feld durch das Arbeitsaggregat der Arbeitsmaschine in vorteilhafter Weise entfernt bzw. unschädlich für das Bearbeiten macht.

Im Gegensatz zum gattungsbildenden Stand der Technik, insbesondere der DE 33 32 578 oder EP 12 66 560, bei denen entweder ein automatisiertes Lokalisieren und Entfernen bzw. Liegen lassen des Fremdkörpers vorgesehen ist oder lediglich eine einfache Meldung erzeugt wird, dass ein Fremdkörper vorhanden ist, wird gemäß der Erfindung die Position des Objekts angezeigt, so dass in vorteilhafter Weise eine Person den Ort bzw. die Position des Objektes z.B. auf einem Display, Bildschirm oder dergleichen sehen kann.

Vor allem durch die Sichtbarmachung der Position des Objektes bzw. Fremdkörpers wird ein Finden, der zumeist im Erntegut versteckten bzw. eingebetteten Fremdkörper bzw. Metallobjekte, entscheidend erleichtert bzw. verbessert. Vorzugsweise ist die Positionsanzeigevorrichtung als optische Positionsanzeigevorrichtung zum visuellen Anzeigen der gespeicherten Position ausgebildet.

Es ist denkbar, dass etwa am Ort der erfassten Position des Objektes eine Markierung angebracht wird, z.B. ein Stab bzw. Speer mit gegebenenfalls einer Signalflagge oder dergleichen.

Vorteilhafterweise wird die Position des Objektes auf einem Bildschirm, Display oder dergleichen visuell angezeigt, z.B. als Punkt, Kreuz oder dergleichen auf einer Feld- bzw. Kartendarstellung.

Weiterhin gewährleistet die von der landwirtschaftlichen Arbeitsmaschine separate Baueinheit, dass das Objekt nicht nur zeitlich, sondern auch räumlich unabhängig von der Bearbeitung bzw. von der Arbeitsmaschine gesucht und angezeigt bzw. signalisiert und entfernt bzw. unschädlich' für das Bearbeiten gemacht werden kann.

Mit Hilfe der Erfindung kann somit in vorteilhafter Weise das Entfernen bzw. das unschädlich Machen auf dem Feld angeordneter, insbesondere mobiler Objekte, z.B. Steine, Metallgegenstände wie vor allem Zinken oder dergleichen, ohne großen Aufwand zuverlässig und sicher für das Arbeitsaggregat enorm flexibel durchgeführt werden.

In vorteilhafter Weise ist die Positionsanzeigevorrichtung derart ausgebildet, dass diese eine Entfernung bzw. eine Differenz und/oder einen Weg zwischen der Ist-Position der Person und/oder der landwirtschaftlichen Arbeitsmaschine und der gespeicherten Position des Objektes bzw. des Fremdkörpers anzeigt. Hierdurch wird das Finden des Fremdkörpers zusätzlich erleichtert.

Darüber hinaus kann die optische Positionsanzeigevorrichtung beispielsweise mittels Pfeilen, Balken oder dergleichen realisiert werden, wobei die Richtung zum Ort des Objektes bzw. zur gespeicherten Position z.B. durch einen leuchtenden Pfeil bzw. Symbol verdeutlicht wird. Beim Erreichen des gespeicherten Ortes kann beispielsweise ein Leuchten eines Signalleuchtelementes das Erreichen der gespeicherten Position verdeutlichen.

Visuell kann eine Distanz der Ist-Position der entsprechenden Person bzw. Arbeitsmaschine zum Objekt bzw. zur gespeicherten Position durch mehrere Leuchtelemente, wie z.B. LEDs oder dergleichen, realisiert werden, wobei diese insbesondere als linienhafte Elementgruppe angeordnet sind und beispielsweise beim Annähern an das Objekt bzw. an die gespeicherte Position durch eine zunehmende Anzahl an leuchtenden Elementen signalisiert wird.

Alternativ oder in Kombination zur optischen Positionsanzeigevorrichtung ist die Positionssignalisierungs- bzw. Positionsanzeigevorrichtung als akustische Positionsanzeigevorrichtung zum hörbaren Anzeigen bzw. Signalisieren der gespeicherten Position ausgebildet. Auch mit dieser Variante der Erfindung ist es beispielsweise möglich eine Differenz der Ist-Position der Person bzw. der Arbeitsmaschine zum Objekt z.B. durch Variation der Lautstärke des akustischen Signals und/oder eine Richtung zum gespeicherten Objektort bzw. der Position durch Variation der Lautstärke anzuzeigen.

Denkbar ist auch, dass die akustische Positionsanzeigevorrichtung zur Sprachausgabe ausgebildet ist und insbesondere mittels Sprachbefehlen die Position der das Objekt suchenden Person angibt, wo das Objekt liegt. Zum Beispiel kann durch Anweisungen wie "links", "rechts", "geradeaus" und/oder "Position erreicht", etc. das Finden der gespeicherten Position bzw. des entsprechenden Objektes wesentlich vereinfacht werden.

In einer vorteilhaften Variante der Erfindung ist die Positionsanzeigevorrichtung an der landwirtschaftlichen Arbeitsmaschine angeordnet. Hiermit wird erreicht, dass beispielsweise mittels der landwirtschaftlichen Arbeitsmaschine in besonders einfacher Weise die Position des Objektes angefahren bzw. gefunden werden kann. Der Fahrer kann hierbei in vorteilhafter Weise sehr einfach mittels der Positionsanzeigevorrichtung die Position des Objekts beim Fahren erkennen. Beispielsweise ist die separate Baueinheit zumindest während der Bearbeitung auf dem Feld an der Arbeitsmaschine lösbar fixiert.

Vorteilhafterweise weist die landwirtschaftliche Arbeitsmaschine die Speichereinheit auf. Entsprechende Arbeitsmaschinen sind vergleichsweise groß dimensioniert, so dass die entsprechende Speichereinheit einfach unterzubringen ist.

Vorzugsweise ist die Positionsanzeigevorrichtung und/oder die Speichereinheit und/oder die Positionsbestimmungseinheit und/oder die Erfassungseinheit an einer Zugmaschine der Arbeitsmaschine angeordnet. Hierdurch wird es möglich, dass die Bedienperson der Zugmaschine in besonders einfacher Weise die Position angezeigt bekommen kann. Beispielsweise weist die Zugmaschine bereits für andere Zwecke einen Bildschirm, z.B. zur Überwachung des Arbeitsaggregats oder dergleichen auf, so dass gegebenenfalls auf bereits vorhandene Komponenten bei der Realisierung der Erfindung zurückgegriffen werden kann. Hierdurch wird der konstruktive Aufwand als auch der wirtschaftliche Aufwand deutlich reduzierbar. Beispielsweise ist bereits eine Positionsbestimmungseinheit vorgesehen, so dass auch diese für die Erfindung in vorteilhafter Weise verwendet werden kann.

Beispielsweise ist die Positionsanzeigevorrichtung und/oder die Speichereinheit und/oder die Positionsbestimmungseinheit und/oder die Erfassungseinheit teilweise oder vollständig an der Arbeitsmaschine bzw. der Zugmaschine montiert. Beispielsweise kann eine oder mehrere der zuvor genannten, Komponenten lösbar und/oder steckbar mit der Zugmaschine bzw. der Arbeitsmaschine verbunden werden, so dass diese in besonders einfacher Weise, beispielsweise während einer Suchphase, von der Zugmaschine bzw. der Arbeitsmaschine entfernt werden können. Vorzugsweise ist zumindest die Positionsanzeigeeinheit und die Speichereinheit lösbar und/oder steckbar in Bezug zur Arbeitsmaschine bzw. Zugmaschine ausgebildet.

In einer vorteilhaften Ausführungsform der Erfindung ist die Speichereinheit in der von der landwirtschaftlichen Arbeitsmaschine separaten Baueinheit integriert. Hierdurch wird gewährleistet, dass die gespeicherte Position des Objektes in der Baueinheit abgespeichert und mittels der Positionsanzeigevorrichtung entsprechend angezeigt wird. Hierdurch wird die unabhängige Betriebsweise der Baueinheit weiter verbessert.

Generell ist von Vorteil, beispielsweise die Baueinheit mit einer eigenen Energieversorgungseinheit, insbesondere einem elektrischen Akkumulator, elektrischer Batterie oder dergleichen auszubilden, so dass eine vorteilhafte, unabhängige Energieversorgung der Baueinheit gewährleistet ist. Möglicherweise können auch Photovoltaikzellen oder Brennstoffzellen hierzu verwendet werden.

Denkbar ist auch, dass die Baueinheit elektrische Kontaktvorrichtungen bzw. Stecker/Buchsen aufweist, mittels der diese mit der Arbeitsmaschine bzw. der Zugmaschine verbindbar ist und wodurch beispielsweise elektrische Signale und/oder elektrische Energie transferierbar sind.

Beispielsweise wird mit der Kontaktvorrichtung bzw. Steckex/Buchse das Erfassen des Fremdkörpers und/oder die von der Positionsbestimmungseinheit erfasste Position, insbesondere die Positionskoordinaten des Objekts, der Baueinheit zuführbar.

Beispielsweise ist die Erfassungseinheit und/oder die Positionsbestimmungseinheit an der Arbeitsmaschine bzw. der Zugmaschine so angeordnet, so dass entsprechende erzeugte elektrische Signale über die Position des Objekts der Baueinheit in vorteilhafter Weise übermittelt werden können, z.B. über elektrische Kabel oder dergleichen.

Vorzugsweise umfasst die landwirtschaftliche Arbeitsmaschine, insbesondere die Zugmaschine, wenigstens eine Sendeeinheit zum Senden von Positionssignalen. Darüber hinaus ist von Vorteil, dass die separate Baueinheit wenigstens eine Empfangseinheit zum Empfangen der Positionssignale aufweist. Mit Hilfe der Kombination dieser Maßnahmen wird eine vorteilhafte Übermittlung der Positionssignale zur Baueinheit realisierbar.

Vorteilhafterweise sind die Positionssignale als Funksignale ausgebildet, insbesondere als GPS-Signale oder dergleichen. Hierdurch wird eine besonders einfache Übermittlung entsprechender Positionssignale zur separaten Baueinheit verwirklichbar.

In einer besonderen Weiterbildung der Erfindung ist die von der landwirtschaftlichen Arbeitsmaschine separate, insbesondere mobile Baueinheit als mit einem speziellen bzw. zusätzlichen Fahrzeug, z.B. einem Auto, Motorrad oder einem sogenannten "Quad" bzw. ATV (All Terrain Vehicles) etc., und/oder als von einer Person tragbare Baueinheit ausgebildet. Hierdurch wird es möglich, dass beispielsweise eine beliebige Person die Baueinheit unabhängig von der Arbeitsmaschine bzw. Zugmaschine bewegen, insbesondere zum gespeicherten Ort bzw. zur gespeicherten Position in einfacher bzw. schneller Weise bewegen kann. Hierbei ist von besonderem Vorteil, dass die Positionsanzeigeeinheit der Baueinheit der Person den Ort bzw. die Position des Objekts bzw. Fremdkörpers in vorteilhafter Weise anzeigt. Dies kann in unterschiedlichster Weise beispielsweise optisch und/oder akustisch erfolgen, wie dies bereits weiter oben ausgeführt ist.

Bei einer derartigen, tragbaren bzw. der separaten Baueinheit ist weiterhin von ganz besonderem Vorteil, dass beispielsweise in der modernen Landwirtschaft, z.B. der Eigentümer des zu bearbeitenden Feldes, Erntegut mittels einem Schwader zu einem Schwad zusammenrecht, wobei gemäß der Erfindung die Arbeitsmaschine das Objekt erfasst, dessen Position bestimmt und in der Speichereinheit abspeichert. Unabhängig davon, ob z.B. die Speichereinheit in der Zugmaschine, der Arbeitsmaschine und/oder in der Baueinheit integriert ist, wird gemäß der Erfindung eine zeitliche Entkopplung der Positionsbestimmung sowie dem Suchvorgang und/oder dem Entfernungsvorgang möglich. Es kommt häufig vor, dass das Abernten des Erntegutes zum Teil deutlich zeitlich versetzt realisiert wird, z.B. Stunden bzw. einen,Tag später, insbesondere von einem Lohnunternehmer.

Gemäß der Erfindung bzw. mit der tragbaren Baueinheit ist es nun möglich, in der Zwischenzeit beispielsweise zu Fuß oder mittels einem Fahrzeug wie einer/der Arbeitsmaschine bzw. Zugmaschine oder einem Motorrad, "Quad" etc. zur gespeicherten Position zu gehen/fahren, wobei die Positionsanzeigevorrichtung der Person die gespeicherte Position bzw. die Positionskoordinaten anzeigt.

Vorteil bei der vorgenannten Verfahrensweise ist insbesondere, dass beliebige Personen zu einem beliebigen Zeitpunkt in einfacher Weise unabhängig von den unterschiedlichsten Bearbeitungsschritten den erfassten Fremdkörper, bzw. das Objekt suchen und entfernen kann, wodurch es bei der Bearbeitung bzw. den Bearbeitungsvorgängen zu keinem Zeitverlust kommt. Hierbei muss diese Person keine hochqualifizierte Person sein, diese kann vielmehr eine Person sein, die mit heutigen, z.T. hochtechnisierten Arbeitsmaschinen nicht arbeiten kann, wie z.B. ein Kind, das zwischen den entsprechenden Bearbeitungsschritten z.B. mit dem Fahrrad zur gespeicherten Position fährt und beispielsweise einen abgebrochen Zinken vom Feld entfernt. Anschließend kann beispielsweise ein Lohnunternehmer ohne Beeinträchtigung das Erntegut auf dem Feld abernten.

### Ausführungsbeispiel

Ein Ausführungsbeispiel ist in der Zeichnung dargestellt und wird anhand der Figuren nachfolgend näher erläutert.

Im Einzelnen zeigt:
- Figur 1: eine schematische Darstellung einer landwirtschaftlichen Arbeiteinheit gemäß der Erfindung mit einer Arbeitsmaschine und separater Baueinheit,
- Figur 2: eine schematische Darstellung einer weiteren Arbeitseinheit gemäß der Erfindung und
- Figur 3: eine schematische Darstellung einer transportablen Baueinheit mit unterschiedlichen Anzeigemöglichkeiten der Position.

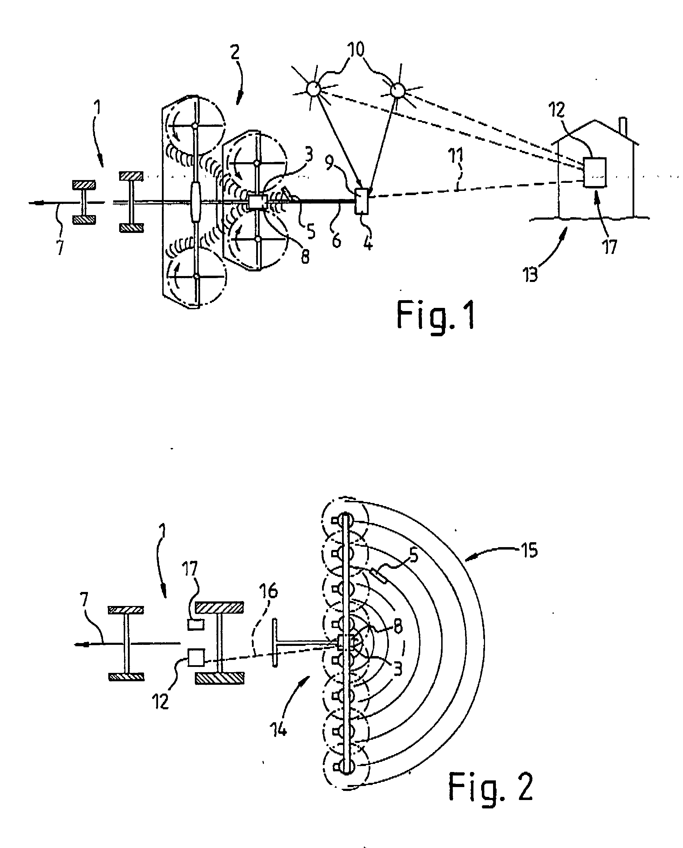

In Figur 1 weist eine landwirtschaftliche Arbeitseinheit eine Zugmaschine 1 bzw. einen Traktor 1 auf, die ein Arbeitsaggregat, hier einen Schwader 2 zieht. Die Zugmaschine 1 fährt in Fahrtrichtung 7. Ohne nähere Darstellung kann es sich auch um einen selbstfahrenden Großschwader oder dergleichen handeln. In der Variante gemäß Figur 1 weist der Schwader 2 einen Metalldetektor 3 und/oder Metalldetektor 4 auf, der zum Erfassen bzw. Detektieren eines Objektes 5 bzw. metallischen Fremdkörpers 5 ausgebildet ist. Der Detektor 4 ist vor allem als alternative Anordnungsmöglichkeit an einem Halter 6 auskragend am Ende des Schwaders 2 fixiert.

Bei der Detektion des Objektes 5 mittels den Detektoren 3 oder 4 wird beispielsweise automatisch ein Signal generiert, das einem Positionsbestimmer 8 oder 9 weitestgehend automatisch und/oder manuell signalisiert, das ein Objekt 5 erfasst bzw. detektiert wurde. Gegebenenfalls kann das Vorhandensein mittels einem Leuchtelement, z.B. LED, und/oder einem Hupton oder dergleichen einer Bedienperson angezeigt werden, wie dies bislang beim Stand der Technik erfolgte.

Der Positionsbestimmer 8 oder 9 übermittelt z.B. Satteliten 10 drahtlos ein Signal, wodurch die entsprechende Position der Arbeitseinheit und/oder des Objekts 5 übermittelt wird. Hierdurch wird bzw. wurde die Position des Objektes bestimmbar und mittels Funksignalen 11 einem Speicher 12 übermittelt. Der Speicher 12 kann sich an einem beliebigen Ort befinden. In Figur 1 ist symbolisch ein Haus 13 als Ort, an dem sich der Speicher 12 befindet, dargestellt.

Generell kann eine Erfassungseinheit bzw. der Detektor 3, 4 in einer einfacheren Variante lediglich das Vorhandensein des Objektes 5 bestimmen und der Positionsbestimmer 8, 9 stellt lediglich zu diesem Zeitpunkt die Position der Arbeitseinheit und somit indirekt die (ungefähre) Position des Objektes 5 fest.

Andererseits kann die Erfassungseinheit bzw. der Detektor 3, 4 das Vorhandensein des Objekts 5 nicht nur feststellen, sondern auch die relative Position bzw. die Entfernung und/oder Richtung zur Arbeitseinheit/Zugmaschine 1/Schwader 2, etc.. Hiermit kann eine direkte bzw. eindeutige Festlegung bzw. Bestimmung der tatsächlichen Position des Objekts 5 realisiert werden.

In Figur 2 ist eine landwirtschaftliche Arbeitseinheit gemäß der Erfindung dargestellt, wobei diese neben der Zugmaschine 1 einen Wender 14 mit Detektor 3 und Positionsbestimmer 8 aufweist. Bei dieser Variante der Erfindung befindet sich der Speicher 12 am bzw. auf dem Traktor bzw. der Zugmaschine 1, wobei der Speicher 12 Signale 16 vom Positionsbestimmer 8 per Funk erhält. Beispielsweise werden hier Blue-Tooth-Komponenten bzw. -Systeme oder dergleichen eingesetzt. Darüber hinaus kann auch eine Übermittlung der Signale 16 per elektrischer Kabel erfolgen.

In Figur 2 ist lediglich aus Gründen der Übersichtlichkeit auf die Darstellung von Satteliten 10 verzichtet worden. Generell ist von Vorteil, die Positionsbestimmung per GPS oder vergleichbarer Systeme zu bestimmen und entsprechend dem Speicher 12 zu übermitteln. Derzeit kann eine Position entsprechender Objekte 5 beispielsweise mit Genauigkeiten kleiner/gleich 5 cm erreicht werden. Dies ist bei Anwendungen in der Landwirtschaft gemäß der vorliegenden Erfindung ausreichend.

In Figur 2 ist schematisch eine Wellenfront 15 dargestellt, die der Detektor 3 aussendet, um das Objekt 5 zu lokalisieren. Hierbei handelt es sich vorzugsweise um elektromagnetische Wellen bzw. Magnetfelder oder dergleichen, um insbesondere metallische Gegenstände bzw. Objekte 5 zu detektieren. Es ist denkbar, dass auch Radareinheiten, insbesondere Dopplerradarsysteme, verwendet werden, so dass insbesondere auch in vorteilhafter Weise nicht metallische Objekte 5 erfassbar sind. Beispielsweise ist es von Vorteil, größere Steine oder dergleichen zu erfassen.

Darüber hinaus ist in den Figuren 1 und 2 eine mobile Anzeige 17 dargestellt, wobei in der Variante gemäß Figur 1 diese in einer Baueinheit mit dem Speicher 12 integriert ist und in der Variante gemäß Figur 2 als separate Einheit ausgebildet ist.

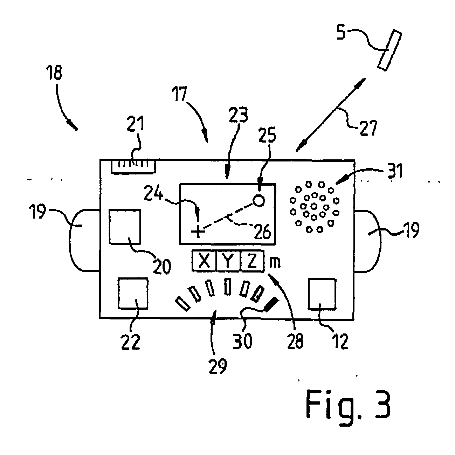

In Figur 3 ist schematisch eine Variante einer Anzeige 17 dargestellt, die als tragbare Baueinheit mit zwei Griffen 19 und/oder Tragegürtel oder dergleichen realisiert ist. Die Baueinheit 18 gemäß Figur 3 umfasst den Speicher 12 sowie einen Empfänger 20 und/oder einen Stecker 21 zum Übermitteln entsprechender Signale 16 bzw. 11. Zur unabhängigen Energieversorgung weist die dargestellte Baueinheit 18 einen Akku 22 auf.

Darüber hinaus umfasst die Anzeige 17 der Baueinheit 18 ein Display 23, worauf z.B. eine Ist-Position 24 der Baueinheit 18 sowie eine Ist-Position 25 des Objektes 5 optisch dargestellt ist. Weiterhin ist zwischen den beiden Ist-Positionen 24 und 25 ein Weg 26 auf dem Display 23 dargestellt, um das Finden der gespeicherten Position 25 des Objekts 5 zu vereinfachen.

Als Pfeil ist eine Distanz 27 dargestellt, die zwischen der Baueinheit 18 und dem Objekt 5 ist. Beispielsweise wird die Distanz 27 mittels einer Anzeige 28 in Metern oder dergleichen angezeigt. Darüber hinaus weist die Baueinheit 18 eine optische Anzeige 29 auf, wobei mittels winklig zueinander angeordneter Elemente, insbesondere Leuchtelemente wie LEDs oder dergleichen, eine Richtung angezeigt wird, die zum Objekt 5 gerichtet ist. In der dargestellten Variante. leuchtet beispielsweise ein Leuchtelement 30 bzw. LED 30, die etwa der Richtung bzw. Ausrichtung des Weges 26 auf dem Display 23 entspricht.

Generell ist festzustellen, dass die dargestellten Anzeigevarianten, d.h. Anzeige 28, 29, 30 eher als Alternativen zu verstehen sind, die jedoch in vorteilhafter Weise auch kombinierbar sind.

Darüber hinaus ist eine weitere alternative Anzeigemöglichkeit als Lautsprecher 31 abgebildet, mit Hilfe dessen beispielsweise Sprache bzw. Sprachbefehle ausgegeben bzw. erzeugt werden können. Beispielsweise kann das System die Distanz in Worten angeben und/oder die Richtung z.B. rechts, links, geradeaus und/oder angeben, dass man sich am Ort der gespeicherten Position des Objektes 5 befindet.

Grundsätzlich kann die Baueinheit 18 neben den dargestellten Komponenten, darüber hinaus auch die Detektoren 3, 4 bzw. Positionsbestimmer 8, 9 umfassen, so dass beispielsweise eine mobile, tragbare Baueinheit 18 realisierbar ist, die insbesondere während dem Bearbeiten eines Feldes am Traktor bzw. an der Zugmaschine 1 und/oder an den Arbeitsaggregaten, z.B. dem Schwader 2, Wender 14 oder dergleichen, anbringbar ist. Beispielsweise wird hiermit automatisch das Vorhandensein eines Objektes 5, dessen Position erfasst bzw. bestimmt und mittels den Anzeigen darstellt bzw. mittels dem Speicher 12 die Position des Objektes 5 abspeichert. Gemäß der Erfindung kann dann zu einem beliebigen Zeitpunkt zum Ort des Objektes 5 bzw. zur abgespeicherten Position gegangen/gefahren und das Objekt 5 entfernt werden.

Generell ist es denkbar, dass auch andere Objekte als z.B., metallische Fremdkörper erfasst und deren Position'bestimmt und entsprechend abgespeichert werden. Beispielsweise kann das Vorhandensein und/oder die Position einer Vertiefung, eines Steins oder dergleichen beispielsweise manuell dem Detektor 3 bzw. 4 eingegeben werden, wodurch ein Signal generiert wird und der Positionsbestimmer 8, 9 den Ort bzw. die momentane Position der Zugmaschine 1 und/oder der Arbeitsaggregate bzw. des Schwaders 2 bzw. Wendlers 14 und/oder der Baueinheit 18 bestimmt und abspeichert. Zu einem beliebigen Zeitpunkt kann dann an den Ort bzw. die gespeicherte Position gemäß der Erfindung zuruckgekehrt werden und beispielsweise die Vertiefung mit entsprechend herbeigebrachtem Material aufgefüllt werden..

### Bezugszeichenliste

- 1: Zugmaschine
- 2: Schwader
- 3: Detektor
- 4: Detektor
- 5: Objekt
- 6: Halter
- 7: Richtung
- 8: Positionsbestimmer
- 9: Positionsbestimmer
- 10: Satellit
- 11: Signal
- 12: Speicher
- 13: Haus
- 14: Wender
- 15: Wellen
- 16: Signal
- 17: Anzeige
- 18: Baueinheit
- 19: Griff
- 20: Empfänger
- 21: Stecker
- 22: Akku
- 23: Display
- 24: Ist-Position
- 25: Ist-Position
- 26: Weg
- 27: Distanz
- 28: Anzeige
- 29: Anzeige
- 30: LED
- 31: Lautsprecher

## Patentansprüche

1. Landwirtschaftliche Arbeitseinheit mit einer wenigstens ein Arbeitsaggregat (2, 14) umfassenden landwirtschaftlichen Arbeitsmaschine (1, 2, 14) zum Bearbeiten eines landwirtschaftlichen Feldes und/oder von auf dem'Feld angeordneten Pflanzen, wobei die Arbeitsmaschine (1, 2, 14) wenigstens eine Erfassungseinheit (3, 4) zum Erfassen eines auf dem Feld angeordneten Objektes (5), insbesondere eines Metallgegenstands, sowie wenigstens eine Positionsbestimmungseinheit (8, 9) zum Bestimmen der Position, insbesondere der Positionskoordinaten, der Arbeitsmaschine (1, 2, 14) und/oder des Objektes (5) umfasst, **dadurch gekennzeichnet, dass** wenigstens eine Speichereinheit (12) zum Speichern der Position vorgesehen und dass wenigstens eine Positionsanzeigevorrichtung (17, 23, 28, 29, 30, 31) zum Anzeigen der gespeicherten Position vorgesehen ist und dass die Positionsanzeigevorrichtung (17, 23, 28, 29, 30, 31) in einer von der landwirtschaftlichen Arbeitsmaschine separaten Baueinheit (18) integriert ist.

2. Arbeitseinheit nach Anspruch 1, **dadurch gekennzeichnet, dass** die Positionsanzeigevorrichtung (17, 23, 28, 29, 30, 31) als optische Positionsanzeigevorrichtung (17, 23, 28, 29, 30) zum visuellen Anzeigen der gespeicherten Position ausgebildet ist.

3. Arbeitseinheit nach einem der vorgenannten Ansprüche, **dadurch gekennzeichnet, dass** die Positionsanzeigevorrichtung (17, 23, 28, 29, 30, 31) als akustische Positionsanzeigevorrichtung (17, 31) zum hörbaren Anzeigen der gespeicherten Position ausgebildet ist.

4. Arbeitseinheit nach einem der vorgenannten Ansprüche, **dadurch gekennzeichnet, dass** die Positionsanzeigevorrichtung (17, 23, 28, 29, 30, 31) an der Arbeitsmaschine (1, 2, 14) angeordnet ist.

5. Arbeitseinheit nach einem der vorgenannten Ansprüche, **dadurch gekennzeichnet, dass** die landwirtschaftliche Arbeitsmaschine (1, 2, 14) die Speichereinheit (12) aufweist.

6. Arbeitseinheit nach einem der vorgenannten Ansprüche,
**dadurch gekennzeichnet, dass** an einer Zugmaschine (1) der Arbeitsmaschine (1, 2, 14) die Positionsanzeigevorrichtung (17, 23, 28, 29, 30, 31) und/oder die Speichereinheit (12) und/oder die Positionsbestimmungseinheit (8, 9) und/oder die Erfassungseinheit (3, 4) angeordnet ist.

7. Arbeitseinheit nach einem der vorgenannten Ansprüche, **dadurch gekennzeichnet, dass** die Speichereinheit (12) in der von der landwirtschaftlichen Arbeitsmaschine (1, 2, 14) separaten Baueinheit (18) integriert ist.

8. Arbeitseinheit nach einem der vorgenannten Ansprüche, **dadurch gekennzeichnet, dass** die landwirtschaftliche Arbeitsmaschine (1, 2, 14) wenigstens eine Sendeeinheit zum Senden von Positionssignalen umfasst.

9. Arbeitseinheit nach einem der vorgenannten Ansprüche, **dadurch gekennzeichnet, dass** die von der landwirtschaftlichen Arbeitsmaschine (1, 2, 14) separate Baueinheit (18) wenigstens eine Empfangseinheit (20) zum Empfangen der Positionssignale aufweist.

10. Arbeitseinheit nach einem der vorgenannten Ansprüche, **dadurch gekennzeichnet, dass** die Positionssignale als Funksignale ausgebildet sind.

11. Arbeitseinheit nach einem der vorgenannten Ansprüche, **dadurch gekennzeichnet, dass** die von der landwirtschaftlichen Arbeitsmaschine (1, 2, 14) separate Baueinheit (18) als von einer Person tragbare Baueinheit (18) ausgebildet ist.

12. Arbeitseinheit nach einem der vorgenannten Ansprüche, **dadurch gekennzeichnet, dass** die Positionsanzeigevorrichtung (17, 23,'28, 29, 30, 31) wenigstens zur Anzeige einer Entfernung (27) der Arbeitsmaschine (1, 2, 14) und/oder der Baueinheit (18) zum Objekt (5) ausgebildet ist.

13. Arbeitseinheit nach einem der vorgenannten Ansprüche, **dadurch gekennzeichnet, dass** die Positionsanzeigevorrichtung (17, 23, 28, 29, 30, 31) wenigstens zur Anzeige des Weges (26) der Arbeitsmaschine (1, 2, 14) und/oder der Baueinheit (18) zum Objekt (5) ausgebildet ist.
